# EUROPEAN PATENT APPLICATION

(11) **EP 4 811 185 A1**
(43) Date of publication of application: **23.09.2026**
(21) Application number: 25164395.3
(22) Date of filing: 18.03.2025
(51) Int. Cl.: G06F 21/44, H04L 9/40, H04W 12/069

(54) **DEVICE AUTHENTICATION**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

A method of authenticating a new device to a network is described, which comprises receiving a request from the new device, the request being associated with a Manufacturer Usage Description (MUD) file, and authenticating the new device to the network in dependence on the content of the MUD file. In this way, it is possible to provide for unique authentication without the need for user input and without revealing private information to participating parties/devices.

## Description

The present disclosure relates to device authentication, and in particular to a method and system for authenticating a new device to a network.

### BACKGROUND

Device authentication is concerned with verifying a device's identity to ensure that only authorised devices are permitted to access certain resources or perform specific actions. Typically, authentication follows three phases: identification, authentication, and authorisation.

Identification: the device sends an identification request to an authentication device or server. This request may include some form of device identification, for example, an authentication device or server. This request may consist of some form of device identification, for example, an authentication device or server. This request may include some form of device identification, for example, a device serial number or MAC address.

Authentication: the authentication device/server will check for the identification request against the list of authorised devices/credentials. Typically, it is done with the help of the user such as with a username and password, certificate, and pre-shared key provided by the device.

Authorisation: if the device is successfully authenticated, the authentication device or server will grant access to the requested resources. Actions can be done by assigning the device a token or session ID that allows it to access the authorised resource.

There are many methods of device authentication, including password-based authentication, certificate-based authentication, two-factor authentication, and key authentication.

Device or user authentication is a key step to ensure that only authorised devices or users will access sensitive information. This is the first phase of applying security to a network.

Current device authentication requires the user first to register and perform authenticate manually or with the help of the user.

It would be desirable to provide an authentication system that can perform unique authentication without the need for user input and which does not reveal private information to participating parties/devices.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect there is a method of authenticating a new device to a network, comprising:
receiving a request from the new device, the request being associated with a Manufacturer Usage Description (MUD) file; and
authenticating the new device to the network in dependence on the content of the MUD file.

In this way, it is possible to provide for unique authentication without the need for user input and without revealing private information to participating parties/devices.

Authenticating the new device to the network may comprise determining, using the MUD file, whether another device associated with the same manufacturer is already authenticated to the network, and wherein an authentication process used for the new device is different depending on the result of the determination.

If it is determined, using the MUD file, that another device associated with the same manufacturer as the new device is already authenticated to the network, the authentication process may comprise a step of using a shared certificate and/or encryption key with the device already authenticated to the network.

In this case, the method may comprise sending from the new device to said another device, a manufacturer certificate, and verifying, by said another device, the received manufacturer certificate. Then, the method may further comprise generating, by said another device, a shared key for the new device to communicate using the network, and sending the shared key to the new device.

If, however, it is determined, using the MUD file, that no other device associated with the same manufacturer as the new device is currently authenticated to the network, the authentication process may comprise a step of generating a key and/or token based on the MUD file to authenticate the new device to the network.

In this case, the authentication process may be a zero knowledge authentication process comprising a key generation process, and wherein the key generation process is carried out based on a set of one or more device characteristics extracted from the MUD file.

The device characteristics to be used for the key generation process may be selected based on one or more of a location of the new device, a type of data the device will send and a sensitivity of the device.

The device characteristics to be used for the key generation process may include one or both of device specific constraints and manufacturer specific constraints included in the MUD file. The zero knowledge authentication process may be a ZK-SNARK process.

According to another aspect, there is a computer program which, when executed by a computer, causes the computer to perform a method according to the above.

According to another aspect, there is a system for authenticating a new device to a network, comprising:
a gateway, for receiving a request from the new device, the request being associated with a Manufacturer Usage Description (MUD) file; and
wherein the gateway is configured to authenticate the new device to the network in dependence on the content of the MUD file.

The system may comprise a server, storing MUD files, wherein the request from the new device comprises or is associated with a MUD link, and the gateway is configured to use the MUD link to obtain the MUD file from the server.

The system may comprise another device authenticated to the network, wherein authenticating the new device to the network comprises determining, using the MUD file, whether another device associated with the same manufacturer is already authenticated to the network, and wherein an authentication process used for the new device is different depending on the result of the determination.

Said another device may be configured to verify a manufacturer certificate received from the new device, and to generate and send to the new device a shared key for the new device to communicate using the network.

Generally, the present technique is concerned with automatically adding a new device to a home network using zero-knowledge authentication that overcomes the issue of requiring the home user to add a new device to the home network using the network credentials. In a normal situation, each time a home user brings a new device to their home they have to remember the credentials of the network, configure the new device with the network credentials and add the new device to the network, which will require some effort from the user to remember the current credentials of the network and how to configure the new device to authenticate to the network. Further, if the user tries to change the credentials of home network authentication then they have to reconfigure all devices at home with the new credentials. The present technique addresses this issue in two ways.

Firstly, if a new device attempts to join the home network and there is no other device from the same manufacturer at home, then the new device will use the zero-knowledge authentication with a MUD file to create a token, to authenticate to the network with seamless interaction from the user. This method will rely on the token that is generated based on the MUD file to have a unique identification of the IoT device and use the Zero-knowledge authentication process to add the new device to the network based on the generated token.

Secondly, if the new device tries to join the home network and there is another device from the same manufacturer at home, then the new device will use the chain of trust to authenticate itself to the network using the shared certificate with the same manufactured device to automatically be added to the home network and use a shared encryption key generated by the already trusted device.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of a data processing system for implementing the present technique;
FIG. 2 is a representation of a zK-SNARK algorithm;
FIG. 3 is a signalling diagram illustrating part of the method, in particular a zk-SNARK authentication process;
FIG. 4 is a signalling diagram illustrating part of the method, in particular stage 1 authentication using zk-SNARK;
FIG. 5 is a signalling diagram illustrating part of the method, in particular a chain of trust authentication process;
FIG. 6 is a signalling diagram illustrating part of the method, in particular key generation using chain of trust.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

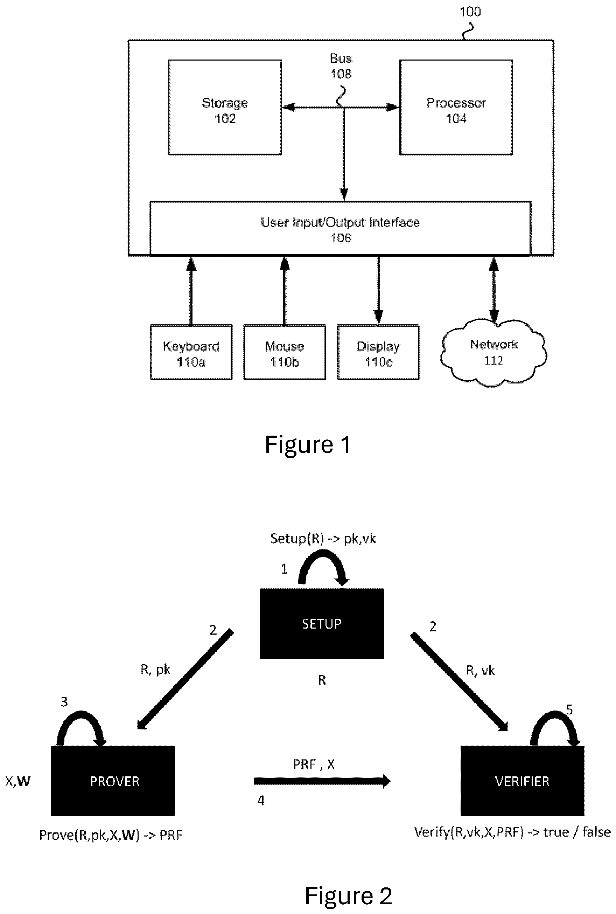

Figure 1 is a block diagram of a computer system 100 suitable for the operation of embodiments of the present invention. The system 100 comprises: a storage 102, a processor 104 and an input/output (I/O) interface 106, which are all communicatively linked over one or more communication buses 108.

The storage (or storage medium or memory) 102 can be any volatile read/write storage device such as a random access memory (RAM) or a non-volatile storage device such as a hard disk drive, magnetic disc, optical disc, ROM and so on. The storage 102 can be formed as a hierarchy of a plurality of different storage devices, including both volatile and non-volatile storage devices, with the different storage devices in the hierarchy providing differing capacities and response times, as is well known in the art.

The processor 104 may be any processing unit, such as a central processing unit (CPU), which is suitable for executing one or more computer programs (or software or instructions or code). These computer programs may be stored in the storage 102. During operation of the system, the computer programs may be provided from the storage 102 to the processor 104 via the one or more buses 108 for execution. One or more of the stored computer programs, when executed by the processor 104, cause the processor 104 to carry out a method according to an embodiment of the invention, as discussed below (and accordingly configure the system 100 to be a system 100 according to an embodiment of the invention).

The input/output (I/O) interface 106 provides interfaces to devices 110 for the input or output of data, or for both the input and output of data. The devices 110 may include user input interfaces, such as a keyboard 110a or mouse 110b as well as user output interfaces such as a display 110c. Other devices, such a touch screen monitor (not shown) may provide means for both inputting and outputting data. The input/output (I/O) interface 106 may additionally or alternatively enable the computer system 100 to communicate with other computer systems via one or more networks 112. It will be appreciated that there are many different types of I/O interface that may be used with computer system 100 and that, in some cases, computer system 100 may include more than one I/O interface. Furthermore, there are many different types of device 110 that may be used with computer system 100. The devices 110 that interface with the computer system 100 may vary considerably depending on the nature of the computer system 100 and may include devices not explicitly mentioned above, as would be apparent to the skilled person. For example, in some cases, computer system 100 may be a server without any connected user input/output devices. Such a server may receive data via a network 112, carry out processing according to the received data and provide the results of the processing via a network 112.

It will be appreciated that the architecture of the system 100 illustrated in figure 1 and described above is merely exemplary and that other computer systems 100 with different architectures (such as those having fewer components, additional components and/or alternative components to those shown in figure 1) may be used in embodiments of the invention. As examples, the computer system 100 could comprise one or more of: a personal computer; a laptop; a tablet; a mobile telephone (or smartphone); a television set (or set top box); a games console; an augmented/virtual reality headset; a server; or indeed any other computing device with sufficient computing resources to carry out a method according to embodiments of this invention.

It is useful to consider some definitions, prior to explaining how the present technique is carried out.

Manufacturer Usage Description (MUD) is a standardised framework established in 2019 by the Internet Engineering Task Force (IETF). The purpose of MUD is to enhance the security of Internet of Things (IoT) devices by providing a way to specify and communicate the intended network behaviour of these devices. IoT devices are diverse and often have different communication needs, so MUD aims to facilitate the correct and secure operation of these devices within a network.

The MUD standard allows manufacturers to define a clear device usage description. This description outlines the communication and network resources a device requires for its intended operation. This information is then used by network infrastructure components, such as routers and firewalls, to enforce policies that restrict the device's network access to only those resources necessary for its proper functioning. By implementing MUD, the security of IoT devices can be improved, reducing the risk of unauthorised access or malicious activities.

In summary, MUD provides a standardised way for manufacturers to describe the expected network behaviour of their loT devices, helping to enhance security and control in networked environments.

A Zero-Knowledge Succinct Non-Interactive Argument of Knowledge (zk-SNARK) is a cryptographic proof system that allows one party to prove to another that a certain statement is true without revealing any details. The term "zero-knowledge" implies that the prover can convince the verifier of the statement's truthfulness without disclosing any information beyond the fact that they know the statement is true.

The "succinct" part of zk-SNARK refers to the efficiency of the proof. These proofs are relatively short and can be quickly verified, making them suitable for various applications, including blockchain and cryptocurrency systems.

The "non-interactive" aspect means the proof doesn't require back-and-forth communication between the prover and verifier. The prover generates the proof and can be independently verified by the verifier without further interaction.

The zK-Snark protocol works in three stages.
Key generation
Proof generation
Verification

The key generation process is as follows, and is described with reference to Figure 1.

The initial setup phase generates cryptographic keys for the proof and verification system. This function produces a proving key for creating proof and a verification key to verify the proof.
C(x,w) - is the logical statement that is to be verified without revealing the details
X - public input
W - private input (witness) or secret that should not be revealed
λ- security parameters as an input

During the key generation process to generate the PK proving key and VK Verification Key, both key generations should be done securely or by a secure third party in the setup phase.

The equation of the key generation process is Setup (C, λ) -> (pk, vk).

The second phase of the zK-Snark is proof generation. It is carried out by the device that is to be authenticated (prover), referred to in Figure 1.

Here, the prover creates cryptographic proof (succinct, ZKP) to be sent to the verifier.
W-> private input (witness): This is a secret that the device does not want to reveal to verifier devices.
X->public inputs

During the key generation process, two keys are generated. One is used for verifying the key by the verifier and another one is for the prover to generate a proof. Pk - > proving key to produce PRF.

PRF is the proof generated by the device that is to be authenticated.

### Prove(w,x,pk)-> PRF

The final stage of the authentication process is the verification process by the verifier.

The verifier checks the validity of the cryptographic proof provided by the prover.
PRF-> proof the proof was sent by the prover to the verifier with public input.
Vk-> verification key was sent to the verifier by key generation process VK.
X->public input

Verify (vk,PRF,X)-> true. The verifier devices verify the proof with x public input with vk verifying key.

It checks for false or true.

The ZK_Snark key generation can be implemented using Elliptical Curve Cryptography (ECC), trusted Step, and Fair-Shamir Heuristic. However, in the present example the ECC method is used.

Elliptic Curve Cryptography (ECC) is a type of public key cryptography that relies on the mathematical properties of elliptic curves over finite fields. ECC is widely used for secure communication, digital signatures, and key exchange protocols.

An elliptic curve is a mathematical structure defined by an equation of the form: ${y}^{∧} 2 = {x}^{∧} 2 + ax + b$

The curve is defined over a finite field, which means that all arithmetic operations (addition, multiplication) are performed modulo a prime number.

In ECC, each participant has a pair of keys: public and private keys.

The public key is derived from the private key and can be openly shared.

The private key must be kept secret.

Device Specific Characteristics (DSC) are parameters which are specific to an individual instrument and are legally relevant. These parameters include calibration parameters (e.g., span adjustment or other adjustments or corrections) and configuration parameters (e.g. maximum value, minimum value, units of measurement, etc.). It can also be used to uniquely identify devices that can be added to the list. It will be used in our authentication system.

Manufacture Specific Characteristics (MSC) are parameters which are attributes and settings unique to a particular device manufacturer. These parameters often encompass proprietary information, production details, or manufacturer-specific configurations that differentiate devices produced by one manufacturer from those made by others. Examples of manufacturer-specific parameters may include production codes, manufacturing dates, proprietary algorithms, or unique identifiers assigned by the manufacturer. These parameters play a crucial role in establishing the identity, origin, and authenticity of devices, and they are instrumental in quality control, traceability, and overall management of the manufacturing process. The parameters may include, for example, serial number, manufacturer encryption key, custom boot logo, production batch code, etc

Internet of Things plays a major role in various sectors like home and smart cities. However, these devices come with various security problems and implementation problems due to their highly heterogeneous system depending on the manufacturer, and security is not the main concern. IoT devices are widely opted for their low-cost, effective solution for automation and digitalisation of processes in various industries, according to a recent report, as there are 10 billion-plus loT devices connected to the internet, which is expected to reach 25 billion devices by 2030.

Due to the vast number of loT devices in circulation, the identification and authentication of heterogeneous loT devices have different methods designed by the manufacturer. This can make authentication a tedious process for a user, and sometimes there may be security flaws in the authentication method. Authentication generally needs manual user input.

If a scenario presents a need to connect a large number of devices, future smart homes or smart environments need various loT devices to feed information to the main system, so unified and robust authentication methods are important.

To achieve this, the present technique proposes an authentication system that can carry out unique authentication without the need for user input and which does not reveal private information to participating parties/devices.

For illustration purposes, a home scenario is used to explain the system, but the present technique is applicable to device authentication on any network.

In the case of a home network, including several loT devices, each from a different manufacturer that requires different setup and configuration to authenticate to other loT devices at home, then it is necessary to find a mechanism that is seamlessly able to automatically authenticate loT devices to each other and the home hub without requiring from the home user to interact with each device for authentication.

The present technique provides two stages of authentication. The first stage addresses the new device joining the home hub. The second stage relates to whether there is another device in the home network from the same manufacturer already in the network already.

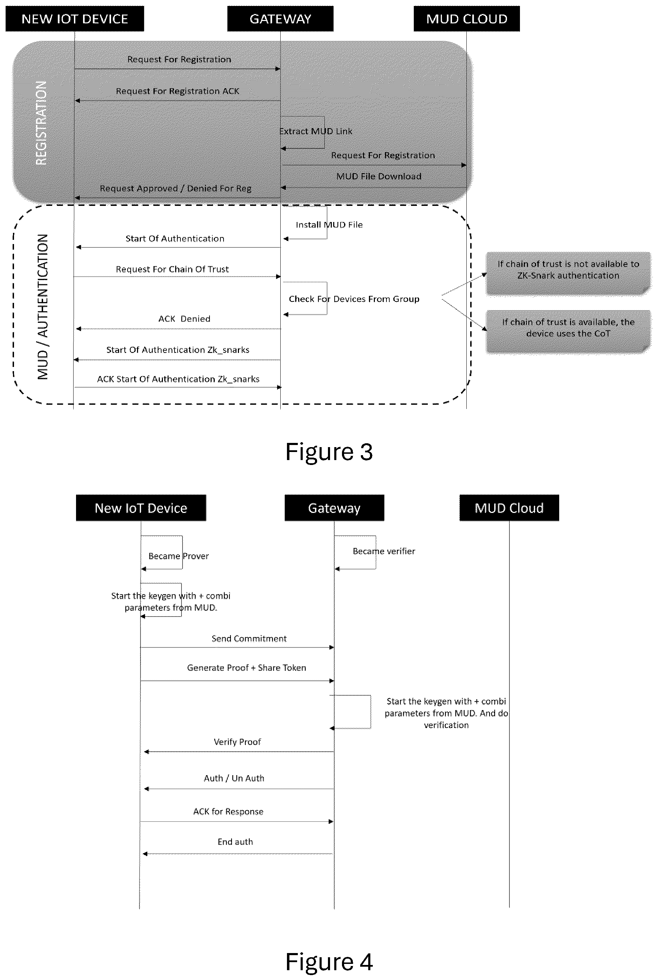

Figures 3 to 6 describe example signalling which may be used to implement the present technique. These figures describe the signal flow between a New IoT Device, a Gateway (Home hub), a MUD cloud, and a previously Authenticated Device.

### Phase One Authentication

In this authentication, consider this scenario: a new device seeks to be authenticated and join the home hub network where there is no other device from the same branded manufacturer in the network.

The first step is registration (top portion of Figure 3). Here, the new device sends a request for registration to the home hub with a reference to the MUD file and MUD Cloud link. Once the Hub receives the request, it will acknowledge the request has been received. Then, the home hub connects to the MUD cloud link and requests the MUD file of the newly joined device. If the file is not found, the registration will be cancelled, so only devices with an MUD file from the manufacturer can continue.

The second step is the MUD based authentication, shown in the bottom portion of Figure 3, and which involves the installation of the MUD file. If the MUD file has been found, it will be downloaded to the hub. Once it has downloaded, it will be installed in the home hub. The home hub will use the MUD file for the Zero-Knowledge (ZK) authentication process, where the Hub will extract a set of device characteristics from the MUD file to be used for the key and token generation process that will be part of the Zero-knowledge authentication to authenticate the new device.

MUD is an open source format, but is required to contain Devices Specific Characteristics (DSP), Manufacture Specific Characteristics protocols, and some basic information. Please refer to the above in Manufacture Usage Description MUD for more details.

The third step is authentication, also illustrated in the bottom portion of Figure 3. Once the hub receives the MUD file from the MUD Cloud provider, then it will trigger the newly added device to start the authentication process. The gateway will select which Characteristics from the MUD file will used for ZK based on:
1. The location of the Newly added device
2. Type of data the loT device will send
3. The sensitivity of the loT device.

The newly added Device will send a request to the home hub to start the Request for Chain of Trust process. The devices in the connected devices, if possible, Suppose it is possible to perform a chain of trust for authentication as other devices from the same manufacturer are in the home network. In that case, the process will be as "Phase two authentication" in a couple of pages.

As this newly added device is the first device from the same manufacturer, then the Device sends a request for ZK_SNARKs authentication.

The hub acknowledges the request of ZK_SNARKs authentication once its ACK is revised. Both devices start the Authentication.

The fourth step, also shown in the bottom portion of Figure 3, is the ZK_SNARKs key ZK authentication process. As explained earlier, this will start with key generation using ECC and selected characteristics from the MUD file to generate the key. The selected characteristics from the MUD file that will be used to generate the verifying and proving keys are extracted from the MSC and DSC areas in the MUD file.

The ZK _SNARKs will generate two keys: the proving key and the verifying key that will be generated by the home hub in secure setup and distributed to both the home hub (verifying key) for the authentication system and to the new device (proving key).

The conventional ZK process uses Polynomial Commitments as a parameter to generate the key, which will take a lot of resources from the loT. Normally, IoT has limited resources, and such a process will be cumbersome for the loT to generate. Hence, the present technique instead uses specific characteristics taken from the MUD file to generate the key.

The modified version of the key generation process using the MUD file will be explained below with reference to Figure 4, and will not consume substantial resources from the loT devices, with the result that it will be faster than the conventional polynomial based process.

In the process below, combined characteristics from the DSC and MSC in the MUD file are used, in a combined fashion, instead of a polynomial process. The combined characteristics may be represented as a series, such as (DSC1∥DSC2∥DSC3∥MSC1∥MSC2).
DSC - device specific characteristics
MSC - Manufacture Specific characteristics.

From the MUD file the characteristics will be selected by the hub based on the location of the loT device, a type of the loT device, and data which will be used by the loT device.

The combined parameters are then hashed:
Hashed_Combined_Parameters=HashFunction(Combined_Parameters)

The hashed parameters are then used in key generation:
Private_Key=ECC_Key_Derivation
Hashed_Combined_Parameters,Curve_Parameters)

The resulting hashed value is utilised as a seed for elliptic curve cryptography (ECC) key derivation. This step generates a private key based on the elliptic curve parameters.

### Proving Key PK

A public key is then generated:
Public_Key=ECC_Multiply(Base_Point,Private_Key) -

ECC operations are used to generate the corresponding public key from the private key. This typically involves multiplying a base point on the elliptic curve by the private key.

### Verification Key VK

When ZK_SNARKs' starts, the new device becomes the prover, and the gateway becomes the verifier. Then, each of them got their respective keys.

The prover and verifier follow the general Zk_SNARKS protocol.

Assume that the new device has a secret (KEY) in the secure storage that needs to prove to the verifier that it has a secret key without revealing it to the gateway. Then the new device uses a proving key with secret, public input, and setup and uses a prove algorithm to generate a proof. Then the proof is sent, and the public input, to the gateway.

Once the hub/gateway receives the verification key and setup, proof from prover and x, it will use all of the information and use a verification algorithm to check true or false. Once it is true, then it will be authenticated and join the network.

This is the end of the first phase of authentication, and it can be seen from Figure 3 that the request for Chain of trust was rejected because it cannot find the matching criteria to enable chain of trust.

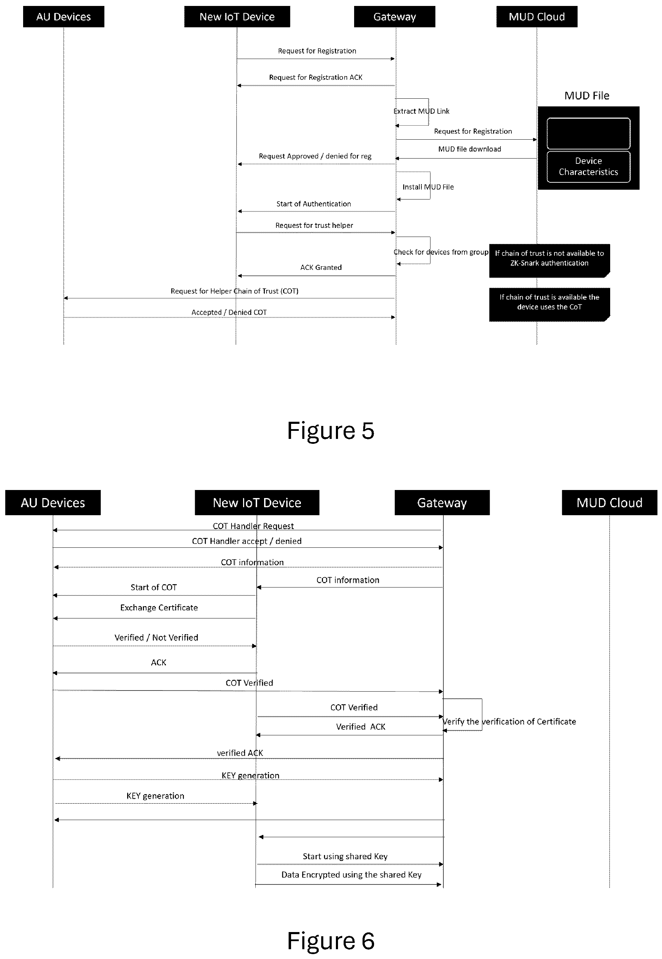

Phase Two Authentication will now be described, based on Figure 5.

In this scenario, the new IoT device tries to join the home network when there is another device from the same manufacturer that is already authenticated.

In a first step, Chain of Trust Authentication (CoT) takes place. This process starts when the new loT device requests to join the network using a chain of trust (CoT).

Once the hub/gateway receives the request for CoT, the gateway will extract the MUD file for this device verified. Then, the hub will check if there are other devices from the same manufacturer in the network.

If the home hub finds other devices in the home network from the same manufacturer, then the gateway / Hub sends the acceptance of the CoT helper request.

This occurs if the home network has an Authenticated Device (AU), an loT device already authenticated in the home network and from the same manufacturer of the newly added IoT device that wants to authenticate and join the home network. If the authenticated device (AU) is eligible for the CoT handler, then the gateway sends the CoT information to the AU device, and then, it can accept or deny the request. If it's denied, then move to the next eligible device. If all of them are denied, it is moved to phase one Authentication, as shown in Figure 6.

Assuming that the AU device has accepted the CoT handler request. Then, the gateway sends the CoT information to the new device that has requested to join the network. The CoT information will include the AU device it contains, which device needs to be authenticated, which device needs to be handled and manufacturer information.

The new device initiates the start of the CoT to the AU devices.by sending a manufacture certificate to the AU device for verification. The AU device verifies the certificate. The certificate could be encrypted using the public/private key of the manufacturer that can be used to verify the certificate of the newly added loT device to the network and hence verify the loT device and then can be used to generate the shared key for the loT device to communicate with the home hub.

At a second step key generation takes place. In particular, once verified and acknowledged by the gateway, the system prepares for the key generation process. Once the AU device has generated the key, it will be securely sent to the new device and gateway in a secure encrypted channel.

The gateway and the new device send the acknowledgement to AU device for the key generation.

Then, the key is used for data encryption. authenticating the new loT device to the network and encrypting all the traffic between the loT and the home hub.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of authenticating a new device to a network, comprising:
receiving a request from the new device, the request being associated with a Manufacturer Usage Description (MUD) file; and
authenticating the new device to the network in dependence on the content of the MUD file.

2. A method as claimed in claim 1, wherein authenticating the new device to the network comprises determining, using the MUD file, whether another device associated with the same manufacturer is already authenticated to the network, and wherein an authentication process used for the new device is different depending on the result of the determination.

3. A method as claimed in claim 2, wherein if it is determined, using the MUD file, that another device associated with the same manufacturer as the new device is already authenticated to the network, the authentication process comprises a step of using a shared certificate and/or encryption key with the device already authenticated to the network.

4. A method as claimed in claim 3, comprising sending from the new device to said another device, a manufacturer certificate, and verifying, by said another device, the received manufacturer certificate.

5. A method as claimed in claim 4, comprising generating, by said another device, a shared key for the new device to communicate using the network, and sending the shared key to the new device.

6. A method as claimed in any of claims 2 to 5, wherein if it is determined, using the MUD file, that no other device associated with the same manufacturer as the new device is currently authenticated to the network, the authentication process comprises a step of generating a key and/or token based on the MUD file to authenticate the new device to the network.

7. A method according to claim 6, wherein the authentication process is a zero knowledge authentication process comprising a key generation process, and wherein the key generation process is carried out based on a set of one or more device characteristics extracted from the MUD file.

8. A method according to claim 7, comprising selecting the device characteristics to be used for the key generation process based on one or more of a location of the new device, a type of data the device will send and a sensitivity of the device.

9. A method according to claim 7 or claim 8, wherein the device characteristics to be used for the key generation process include one or both of device specific constraints and manufacturer specific constraints included in the MUD file.

10. A method according to claim 7 wherein the zero knowledge authentication process is a ZK-SNARK process.

11. A computer program which, when executed by a computer, causes the computer to perform a method according to any preceding claim.

12. A system for authenticating a new device to a network, comprising:
a gateway, for receiving a request from the new device, the request being associated with a Manufacturer Usage Description (MUD) file; and
wherein the gateway is configured to authenticate the new device to the network in dependence on the content of the MUD file.

13. A system according to claim 12, comprising a server, storing MUD files, wherein the request from the new device comprises or is associated with a MUD link, and the gateway is configured to use the MUD link to obtain the MUD file from the server.

14. A system according to claim 12 or claim 13, comprising another device authenticated to the network, wherein authenticating the new device to the network comprises determining, using the MUD file, whether another device associated with the same manufacturer is already authenticated to the network, and wherein an authentication process used for the new device is different depending on the result of the determination.

15. A system according to claim 14, wherein said another device is configured to verify a manufacturer certificate received from the new device, and to generate and send to the new device a shared key for the new device to communicate using the network.
